**Europäisches Patentamt**

**European Patent Office**

**Office européen des brevets**

(19)

(11) Veröffentlichungsnummer: **0 525 695 B1**

(12) ## EUROPÄISCHE PATENTSCHRIFT

(45) Veröffentlichungstag der Patentschrift: **25.01.95**

(21) Anmeldenummer: **92112774.2**

(22) Anmeldetag: **27.07.92**

(51) Int. Cl.[6]: **C09D 5/44**, C09D 151/08, C08F 283/10, //(C08F283/10, 220:34)

(54) **Verfahren zur Herstellung von wasserverdünnbaren, kathodisch abscheidbaren Lackbindemittel-Kombinationen und deren Verwendung.**

(30) Priorität: **02.08.91 AT 1541/91**

(43) Veröffentlichungstag der Anmeldung:
**03.02.93 Patentblatt 93/05**

(45) Bekanntmachung des Hinweises auf die Patenterteilung:
**25.01.95 Patentblatt 95/04**

(84) Benannte Vertragsstaaten:
**BE CH DE ES FR GB IT LI NL SE**

(56) Entgegenhaltungen:
EP-A- 0 250 633
DE-A- 3 628 121
US-A- 4 335 028
US-A- 4 421 569

(73) Patentinhaber: **Vianova Kunstharz Aktienge-sellschaft**
**Bundesstrasse 175**
**A-8402 Werndorf (AT)**

(72) Erfinder: **Kriessmann, Ingo, Dr.**
**Hilmteichstrasse 75**
**A-8010 Graz (AT)**
Erfinder: **Paar, Willibald, Dr.**
**Schanzelgasse 19**
**A-8010 Graz (AT)**
Erfinder: **Holzer, Franz, Dr.**
**Auersperggasse 19**
**A-8010 Graz (AT)**
Erfinder: **Koch, Walter**
**Dammweg 24**
**A-8402 Graz (AT)**

**Beschreibung**

Die Erfindung betrifft ein Verfahren zur Herstellung von wasserverdünnbaren, kathodisch abscheidbaren Lackbindemittel-Kombinationen auf Basis von Epoxidharzamin-Addukten, Acrylatcopolymerisaten und Vernetzungskomponenten, welche insbesonders zur Formulierung von wasserverdünnbaren, kathodisch abscheidbaren Grundierungen und Einschichtlacken geeignet sind.

Bindemittel dieser Art sind aus der DE-OS-36 28 121 A1 bekannt. Im Vergleich zu reinen Acrylatbindemitteln weisen die dort beschriebenen Produkte vor allem eine verbesserte Korrosionsbeständigkeit der eingebrannten Lackfilme auf. Andere Filmeigenschaften, wie die UV-Beständigkeit, die Bewitterungsbeständigkeit oder die Laugenbeständigkeit von Waschmaschinenbeschichtungen, erreichen jedoch nicht die in der Praxis geforderten Werte.

Es wurde nun gefunden, daß durch die Verwendung bestimmter Rohstoffe in den Bindemittelkomponenten und durch spezielle Verfahrensschritte bei der Kombination der Bindemittelkomponenten Produkte erhalten werden, die dem Wunsch der Industrie nach Bindemitteln für Grundierungen und Einschichtlacke mit hellfarbigen, nicht gilbenden, glänzenden, korrosionsfesten und zugleich waschlaugen-, UV- und bewitterungsbeständigen Lackfilmen sehr gut entsprechen.

Die Erfindung betrifft demgemäß ein Verfahren zur Herstellung von wasserverdünnbaren, kathodisch abscheidbaren Lackbindemittel-Kombinationen auf der Basis von Epoxidharzamin-Addukten, Acrylatcopolymerisaten und Vernetzungskomponenten, welches dadurch gekennzeichnet ist, daß man in

(A) 3 bis 30 Gew.-%, vorzugsweise 5 bis 20 Gew.-%, bezogen auf Feststoff, eines basischen epoxidgruppenfreien Addukts aus Epoxidharzen, die gegebenenfalls teilweise defunktionalisiert sind, und Aminoverbindungen, welches eine Aminzahl von 50 bis 170 mg KOH/g, vorzugsweise von 90 bis 130 mg KOH/g, aufweist und welches als 10 bis 40 Gew.-%ige Lösung in einem reaktionsinerten, wassertoleranten Lösungsmittel vorliegt,

(B) 70 bis 97 Gew.-%, vorzugsweise 80 bis 95 Gew.-%, eines Monomerengemisches, welches

(Ba) 7 bis 20 Gew.-% sekundäre oder tertiäre Aminogruppen aufweisende Ester der (Meth)acrylsäure,
(Bb) 15 bis 30 Gew.-% Monoester der (Meth)acrylsäure mit Diolen, die Alkylenreste mit 2 bis 6 C-Atomen und/oder Oxyalkylenreste mit 4 bis 12 C-Atomen aufweisen,
(Bc) 50 bis 78 Gew.-% von (Meth)acrylsäurealkylester, deren Alkylreste 1 bis 18 C-Atome aufweisen, und
(Bd) bis zu 10 Gew.-% aromatische Vinylmonomere, vorzugsweise Styrol,

enthält,

in bekannter Weise radikalisch polymerisiert und 60 bis 80 Gew.-%, bezogen auf Feststoff, dieser Lösung der Komponente (AB), gegebenenfalls nach Verminderung des Lösemittelanteils und/oder teilweiser Protonisierung der Aminogruppen mit Säuren, vorzugsweise mit Ameisen-, Essig- oder Milchsäure, mit

(C) 20 bis 40 Gew.-%, bezogen auf Feststoff, einer Vernetzungskomponente mischt und anschließend die so erhaltene Lackbindemittel-Kombination mit deionisiertem Wasser auf einen für die weitere Verarbeitung geeigneten Feststoffgehalt verdünnt,

mit den Maßgaben, daß die Komponenten (A) und (B) jeweils mindestens 5 Gew.-%, vorzugsweise 10 bis 20 Gew.-%, an identischen aliphatischen Resten mit 7 bis 18 C-Atomen enthalten, daß die Komponente (AB) eine Aminzahl von 30 bis 90 mg KOH/g, vorzugsweise von 40 bis 70 mg KOH/g, und eine Hydroxylzahl von 80 bis 150 mg KOH/g aufweist, und daß die Summen der Prozentzahlen der Komponenten (A) und (B), (Ba) bis (Bd) bzw. (AB) und (C) jeweils 100 ergeben.

Die Erfindung betrifft weiters die nach diesem Verfahren hergestellten Lackbindemittel-Kombinationen sowie deren Verwendung zur Formulierung von wasserverdünnbaren, kathodisch abscheidbaren Grundierungen und Einschichtlacken.

Bedingt durch das Polymerisationsverfahren und die spezifische Rohstoffzusammensetzung, insbesonders durch das Vorliegen eines Anteils an identischen aliphatischen Resten mit 7 bis 18 Kohlenstoffatomen, und die dadurch gegebene Verträglichkeit, können die Eigenschaften der eingebrannten Filme auf der Basis der erfindungsgemäß hergestellten Produkte, wie der Glanzgrad, die UV-Beständigkeit, die Bewitterungsbeständigkeit, die waschlaugenbeständigkeit und die Korrosionsbeständigkeit durch die Auswahl der jeweiligen Rohstoffe entsprechend optimiert werden.

Die Homogenität der Lackbindemittel-Kombinationen wird auch dadurch entscheidend verbessert, daß zum Zeitpunkt der Zugabe der Komponente (C) ein weitgehend wasserfreies Medium vorliegt, abgesehen von der geringeren Menge an Wasser, die bei einer teilweisen Neutralisation der Bindemittelkomponenten über wäßrige Lösungen von Neutralisationsmitteln eingebracht wird. Durch diesen Verfahrensschritt ist es möglich, auch hydrophobe Vernetzungskomponenten, wie nicht wasserverträgliche Aminoharze, verkappte Polyisocyanathärter oder andere Vernetzer einzumischen. Die Lackbindemittel-Kombinationen bleiben auch

2

in den verdünnten wäßrigen Grundierungen oder Einschichtlacken homogen und stabil.

Die Komponente (A) ist ein basisches modifiziertes Epoxidharz, welches pro Molekül mindestens eine Aminogruppe und eine Aminzahl von 50 bis 170 mg KOH/g, vorzugsweise von 90 bis 130 mg KOH/g, aufweist. Wesentliches Merkmal dieser Komponente ist die Anwesenheit von mind. 5 Gew.-%, vorzugsweise von 10 bis 20 Gew.-%, an aliphatischen, vorzugsweise als End- oder Seitenketten vorliegenden Resten mit 7 bis 18 Kohlenstoffatomen, die mit den in der Komponente (B) ebenfalls vorliegenden aliphatischen Resten identisch sind.

Epoxidharzamin-Addukte auf Basis aromatischer und aliphatischer Di-Epoxidharze oder anderer Epoxidverbindungen sind in den verschiedensten Modifikationen in der Literatur beschrieben.

Die Einführung der für die vorliegende Erfindung wesentlichen, längerkettigen aliphatischen Reste in die Komponente (A) erfolgt vorzugsweise durch die Verwendung von Alkylaminen, wie von 2-Ethylhexylamin oder Stearylamin, und/oder durch die Reaktion von entsprechenden Alkylglycidylethern und/oder Alkylglycidylestern mit primären und/oder sekundären Aminogruppen von Epoxidharzamin-Addukten. Die aliphatischen Reste können auch durch die Reaktion von mit Fettalkoholen und/oder Fettaminen halbblockierten Diisocyanaten mit Hydroxyl- und/oder Aminogruppen der Epoxidharzamin-Addukte eingebaut werden. Ferner besteht die Möglichkeit, Fettalkohole bzw. Fettsäuren durch Veresterung in die Komponente (A) einzuführen oder Alkylglycidylether und/oder Alkylglycidylester mit Carboxylgruppen umzusetzen.

Auch entsprechende Seitenketten tragende Verbindungen, wie sie beispielsweise in der AT-PS 391 140 beschrieben sind, können zur Verlängerung von aromatischen Epoxidharzen herangezogen werden.

Die Lösung der Komponente (A) in einem für die folgende Polymerisation inerten, jedoch wasserverdünnbaren oder zumindest wassertoleranten Lösemittel, wie in Alkanolen, Glykolethern oder Glykolestern, dient als Reaktionsmedium für die Herstellung der Komponente (B). Dabei wird ein Monomerengemisch, welches

(Ba) 7 bis 20 Gew.-% sekundäre oder tertiäre Aminogruppen aufweisende Ester der (Meth)acrylsäure,

(Bb) 15 bis 30 Gew.-% Monoester der (Meth)acrylsäure mit Diolen, die Alkylenreste mit 2 bis 6 C-Atomen und/oder Oxyalkylenreste mit 4 bis 12 C-Atomen aufweisen,

(Bc) 50 bis 78 Gew.-% (Meth)acrylsäurealkylester, deren Alkylreste 1 bis 18 C-Atome aufweisen, und

(Bd) bis zu 10 Gew.-% aromatische Vinylmonomere, vorzugsweise Styrol,

enthält,

wobei die Summe der Prozentzahlen aus (Ba) bis (Bd) 100 ergeben muß, in bekannter Weise radikalisch polymerisiert.

Die Reaktionsmischung aus den Komponenten (A) und (B) besteht anspruchsgemäß aus 3 bis 30 Gew.-%, vorzugsweise 5 bis 20 Gew.-%, bezogen auf Feststoff, der Komponente (A) und 70 bis 97 Gew.-%, vorzugsweise 80 bis 95 Gew.-%, der Komponente (B), wobei die Summe der Prozentzahlen aus (A) und (B) ebenfalls 100 ergeben muß. Die Ausgangsstoffe werden weiters in einem Mengenverhältnis gewählt, daß die Komponenten (AB) eine Aminzahl von 30 bis 90 mg KOH/g, vorzugsweise von 40 bis 70 mg KOH/g, und eine Hydroxylzahl von 80 bis 150 mg KOH/g aufweisen.

Als Stickstoffgruppen enthaltende Monomere (Ba) werden bevorzugt N-Monoalkyl und/oder N-Dialkyl-aminoalkyl(meth)acrylate und/oder die entsprechenden N-Alkanolverbindungen eingesetzt. Bei Verwendung von anderen derartigen Monomeren muß das gewünschte Eigenschaftsbild des Lackbindemittels betreffend Gilbung, Haftfestigkeit, Elastizität etc. der Filme berücksichtigt werden.

Bei der Auswahl der Monomeren der Gruppe (Bb) und (Bc) ist die anspruchsgemäße Forderung zu berücksichtigen, daß das Monomerengemisch so zusammengesetzt ist, daß mindestens 5 Gew.-%, vorzugsweise 10 bis 20 Gew.-%, an aliphatischen Resten mit 7 bis 18 C-Atomen, die mit den in der Komponente (A) vorliegenden Resten identisch sind, vorliegen.

Die so hergestellten Komponenten (AB) werden, gegebenenfalls nach Entfernung eines Teiles des eingesetzten Hilfslösemittels und/oder nach teilweiser Protonisierung der Aminogruppen mit Säuren, vorzugsweise mit Ameisen-, Essig- oder Milchsäure, jedoch vor einer Zugabe von Wasser (abgesehen von der üblicherweise im Neutralisationsmittel enthaltenen Menge) mit der Vernetzungskomponente gemischt. Die Mischung erfolgt, bezogen auf Festharz, in einem Verhältnis von 60 bis 80 Gew.-% der Komponente (AB) zu 20 bis 40 Gew.-% der Komponente (C).

Als Komponente (C) werden die für diese Bindemittelklasse üblichen Vernetzungsmittel, die auch hydrophob sein können und durch Umesterung, Umetherung oder Umurethanisierung die Härtung der abgeschiedenen Lackfilme bewirken, eingesetzt.

Die Lackbindemittel-Kombinationen werden schließlich in bekannter Weise mit deionisiertem Wasser auf einen für die weitere Verarbeitung geeigneten Feststoffgehalt verdünnt. Die folgenden Verfahrensschritte zur Herstellung von Lacken sind dem Fachmann bekannt.

3

Die vorliegenden Beispiele erläutern die Erfindung, ohne sie in ihrem Umfang zu beschränken. Alle Angaben in Teilen oder Prozenten beziehen sich, soferne nichts anderes angegeben ist, auf Gewichtseinheiten.

Die Abkürzung EEW bedeutet Epoxidäquivalentgewicht (der verwendeten Epoxidharze).

## 1. Herstellung der Bindemittel-Komponenten

### 1.1. Komponente (A): Modifizierte Epoxidharzamin-Addukte

#### 1.1.1. Herstellung der aliphatische Gruppen tragenden Modifikatoren (V 1 bis V 3)

Modifikator (V 1): Zu einer Lösung aus 103 g (1 Mol) Diethylentriamin und 170 g Methoxypropanol werden bei 60°C innerhalb von 2 Stunden 577 g (3,1 Mol) 2-Ethylhexylglycidylether zugegeben und bis zu einem EPA-Wert (siehe unten) von 3,70 reagiert. Anschließend wird bei 60°C innerhalb von 2 Stunden eine Mischung aus 190 g eines Bisphenol A-Epoxidharzes (EEW ca. 190) und 48 g Methoxypropanol zugegeben und die Reaktion bis zu einem EPA-Wert von 2,76 weitergeführt. Der Festharzgehalt beträgt 80 Gew.-%.

Bestimmung des EPA-Werts:
(Summe der Oxiran- und Aminogruppen in Milliäquivalenten)

0,2 bis 0,4 g Harz werden auf Milligramm genau gewogen und in 5 Tropfen Methoxypropanol geschmolzen. Nach dem Abkühlen werden 25 ml einer Mischung aus Dichlormethan und Eisessig (4:1 Volumsteile) zugegeben. Das Harz wird unter leichtem Erwärmen gelöst. Bei Raumtemperatur werden 0,5 g Tetrabutylammoniumjodid und 3 Tropfen Kristallviolett-Lösung zugegeben. Man titriert mit Perchlorsäure-0,1 N Lösung in Eisessig von blau-violett nach gras-grün (kein Blauton).

Ein Blindwert (ohne Harz) wird in gleicher Weise bestimmt.

$$\text{EPA-Wert} = \frac{(A - B) \times 0{,}1 \times F}{\text{Einwaage (g)}}$$

A = ml Perchlorsäure-0,1 N Lösung für die Probe
B = ml Perchlorsäure-0,1 N Lösung für den Blindwert
F = Faktor der Perchlorsäure-0,1 N Lösung

Bestimmung des Faktors (F) mit Kaliumhydrogenphthalat.

In einer ERLENMEYER-Flasche werden ca. 200 mg Kaliumhydrogenphthalat (pro analysi) auf 0,1 mg genau eingewogen. Nach Zugabe von 30 ml Eisessig und 3 Tropfen Kristallviolett-Lösung wird mit der ca. 0,1 molaren Perchlorsäure-Lösung von blau-violett nach gras-grün titriert.

$$F = \frac{W}{C \times 20{,}422}$$

W = Einwaage Kaliumhydrogenphthalat
C = ml der ca. 0,1 molaren Perchlorsäure-Lösung in Eisessig.

Modifikator (V 2): Zu einer Lösung aus 103 g (1 Mol) Diethylentriamin und 150 g Methoxypropanol werden bei 60°C innerhalb von 2 Stunden 1010 g (3,1 Mol) Stearylglycidylether in 129 g Methoxypropanol zugegeben und bis zu einem EPA-Wert von 2,20 reagiert. Anschließend wird bei 60°C innerhalb von 2 Stunden eine Mischung aus 190 g eines Bisphenol A-Epoxidharzes (EEW 190) und 48 g Methoxypropanol zugegeben und die Reaktion bis zu einem EPA-Wert von 1,84 weitergeführt. Der Festharzgehalt beträgt 80 Gew.-%.

Modifikator (V 3): Zu einer Lösung aus 104 g (1 Mol) Aminoethylethanolamin und 119 g Methoxypropanol werden bei 60°C innerhalb von 2 Stunden 372 g (2 Mol) Ethylhexylglycidylether zugegeben und bis zu einem EPA-Wert von 3,36 reagiert. Der Festharzgehalt beträgt 80 Gew.-%.

1.1.2. Herstellung der Komponenten (A)

Komponente (A1): In einem geeigneten Reaktionsgefäß werden 652 g (0,6 Mol) Modifikator (V 1) 80%ig, 570 g eines Bisphenol A-Diepoxidharzes (EEW 190), 77 g (0,6 Mol) 2-Ethylhexylamin und 162 g Methoxypropanol bei 60°C in einer ersten Reaktionsstufe bis zum vollständigen Umsatz der NH-Funktionalität, d. h. bis zu einem EPA-Wert von 2,15 reagiert. Anschließend werden 1357 g (2 Mol) einer 70%igen Lösung in Methoxypropanol eines Bisphenol A-Diepoxidharzes (EEW 475) und 189 g (1,8 Mol) Diethanolamin zugegeben und wieder bis zum Umsatz der NH-Funktionalität, d. h. bis zu einem EPA-Wert von 1,70 reagiert. In einer dritten Reaktionsstufe werden die restlichen Oxirangruppen mit 78 g (1,66 Mol) N,N-Diethylaminopropylamin 2 Stunden bei 60°C, sowie eine weitere Stunde bei 90°C und 3 weitere Stunden bei 120°C bis zu einem EPA-Wert von 1,55 umgesetzt und mit Methoxypropanol auf einen Festharzgehalt von 65 Gew.-% verdünnt.

Komponente (A2) bis (A4): In gleicher Weise wie bei (A1) angegeben, werden aus den in der Tabelle 1 zusammengefaßten Ansätzen die Komponenten (A2) bis(A4) hergestellt. Bei Komponente (A3) wird in Reaktionsstufe 4 derart verfahren, daß im Anschluß an Reaktionsstufe 3 bei 120°C Methoxypropanol und ein Polyoxypropylenglykoldigylcidylether (EEW 200, Handelsbezeichnung DER® 736, DOW CHEMICAL) zugegeben werden und die Temperatur 3 bis 5 Stunden bis zum Erreichen des gewünschten EPA-Werts gehalten wird.

Komponente (A5): 500 g eines Bisphenol A-Diepoxidharzes (EEW ca. 500) werden in 214 g Methoxypropanol gelöst und bei 110 °C mit 83 g (0,3 Mol) eines Halbesters aus Phthalsäureanhydrid und 2-Ethylhexanol in Gegenwart von 0,5 g Triethylamin als Katalysator bis zu einer Säurezahl von weniger als 3 mg KOH/g reagiert. Anschließend werden 120 g (0,4 Mol) eines NH-funktionellen Oxazolidins aus Aminoethylethanolamin, 2-Ethylhexylacrylat und Formaldehyd, sowie 26 g (0,2 Mol) Diethylaminopropylamin zugefügt und der Ansatz bei 80°C bis zu einem Epoxidwert von praktisch Null reagiert. Der Ansatz wird mit 181 Tlen Methoxypropanol auf einen Festharzgehalt von 70 Gew.-% verdünnt.

Die Kennwerte für die Komponenten (A1) bis (A5) sind in der folgenden Tabelle 2 zusammengefaßt.

Tabelle 1

| Komponente | A 1 | A 2 | A 3 | A 4 |
|---|---|---|---|---|
| Stufe 1 | | | | |
| V1-Lösung (80 % in MP) | 652 | 652 | 325 | --- |
| V2-Lösung (80 % in MP) | --- | --- | --- | 489 |
| Epoxidharz EEW 190 | 570 | 722 | 380 | 570 |
| 2-Ethylhexylamin | 77 | 122 | 65 | --- |
| Stearylamin | --- | --- | --- | 202 |
| MP | 162 | 455 | 237 | 193 |
| EPA-Wert | 2,46 | 2,08 | 2,09 | 1,96 |
| Stufe 2 | | | | |
| Epoxidharz EEW 475 (75 % in MP) | 1330 | 1837 | 1647 | 1330 |
| MP | --- | 268 | 223 | --- |
| V3-Lösung (80 % in MP) | --- | 952 | 536 | --- |
| Monoethanolamin | --- | --- | 68 | --- |
| Diethanolamin | 189 | --- | --- | 189 |
| EPA-Wert | 1,91 | 1,71 | 1,61 | 1,67 |
| Stufe 3 | | | | |
| N,N-Diethylaminopropylamin | 78 | 143 | 78 | 78 |
| MP | --- | 61 | 33 | --- |
| EPA-Wert | 1,76 | 1,56 | 1,56 | 1,52 |
| Stufe 4 | | | | |
| Epoxidharz EEW 200 | --- | --- | 132 | --- |
| MP | --- | --- | 57 | --- |
| EPA-Wert | --- | --- | 1,40 | --- |
| MP = Methoxypropanol | | | | |

Tabelle 2

| Komponente | A 1 | A 2 | A 3 | A 4 | A 5 |
|---|---|---|---|---|---|
| Festharzgehalt Gew.-% | 65 | 65 | 70 | 65 | 70 |
| Aminzahl (mg KOH/g FH) | 124 | 125 | 112 | 107 | 92 |
| Hydroxylzahl (mg KOH/g FH) | 257 | 214 | 220 | 228 | 77 |
| Gew.-% Ethylhexylreste | 11,0 | 18,6 | 14,5 | -- | 10,8 |
| Gew.-% Stearylreste | --- | --- | --- | 18,5 | --- |

1.2. Herstellung der Komponenten (A B)

Komponente (AB 1): In einem für die radikalische Polymerisation geeigneten, mit Rührer, Rückflußkühler, Zulaufgefäß, Stickstoffspülung und Temperaturmessung ausgestatteten Reaktionsgefäß werden 308 Tle der Komponente (A1), 65%ig, und 444 Tle Methoxypropanol auf 85 °C erwärmt. Während 4 Stunden wird dann eine Mischung aus 84 Tlen Dimethylaminoethylmethacrylat, 159 Tlen 2-Hydroxyethylmethacrylat, 306 Tlen n-Butylmethacrylat, 106 Tlen Methylmethacrylat, 145 Tlen 2-Ethylhexylacrylat, 24 Tlen Azobisisobutyronitril und 2 Tlen tert. Dodecylmercaptan gleichmäßig zugegeben. Anschließend wird die Temperatur auf 90 °C erhöht und 2 Stunden gehalten. Nach Zugabe von weiteren 10 Tlen Azobisisobutyronitril wird der Ansatz weitere 3 Stunden bei 90 °C bis zu einem Polymerisationsgrad von mindestens 99,5 % gehalten.

Komponenten (AB 2) bis (AB 10); Vergleichsbeispiel:

In gleicher Weise werden weitere Komponenten (AB) gemäß den in der Tabelle 3 angegebenen Mengenverhältnissen hergestellt. Die Kennzahlen für sämtliche Produkte sind ebenfalls in Tabelle 3 zusammengefaßt.

Erklärung der Abkürzungen in Tabelle 3:

| | |
|---|---|
| DAMA | Dimethylaminoethylmethacrylat |
| BAMA | N-tert. Butylaminoethylmethacrylat |
| HEMA | 2-Hydroxyethylmethacrylat |
| HEA | 2-Hydroxyethylacrylat |
| HBA | 4-Hydroxybutylacrylat |
| TGMA | Tripropylenglykolmethacrylat |
| MMA | Methylmethacrylat |
| BMA | n-Butylmethacrylat |
| BA | n-Butylacrylat |
| EHA | 2-Ethylhexylacrylat |
| SMA | Stearylmethacrylat |
| ST | Styrol |
| DDM | tert. Dodecylmercaptan (Regler) |
| AIBN | Azobisisobutyronitril (Starter) |

## 1.3. Herstellung der Vernetzungskomponenten (C1) bis (C3)

Vernetzungskomponente (C1): In einem geeigneten Reaktionsgefäß werden 2085 Tle (3,6 Mol) eines trimeren Hexamethylendiisocyanats (DESMODUR® N, 100 %, Fa. BAYER, BRD) in 763 Tlen Methoxypropylacetat gelöst und unter Rühren mit 947 Tlen (10,9 Mol) Methylethylketoxim versetzt, wobei die Temperatur 45°C nicht überschreiten soll. Nach Abklingen der exothermen Reaktion wird der Ansatz bis zur vollständigen Umsetzung der NCO-Gruppen bei 50°C gehalten. Das Produkt hat einen Feststoffgehalt von 80 Gew.-%.

Vernetzungskomponente (C2): Zu einer Lösung von 666 Tlen (3 Mol) Isophorondiisocyanat und 0,5 Tlen Dibutylzinndilaurat in 200 Tlen Methoxypropylacetat werden bei max. 35°C 486 Tle (3 Mol) Diethylenglykolmonobutylether langsam zugegeben. Der Ansatz wird bei 35°C gehalten, bis ein NCO-Wert von 9,3 erreicht ist. Nach Erwärmen auf 50°C wird eine Lösung von 134 Tlen (1 Mol) Trimethylolpropan in 229 Tlen Methoxypropylacetat langsam zugegeben und der Ansatz bei 80°C bis zur vollständigen Umsetzung der NCO-Gruppen gehalten. Der Feststoffgehalt beträgt 75 Gew.-%.

Vernetzungskomponente (C3):

396 g (3 Mol) Malonsäuredimethylester und 134 g (1 Mol) Trimethylolpropan werden mit 1,1 g Zinktoktoat (8 % Zn-Gehalt) bei 130°C 10 Stunden lang umgesetzt, wobei ca. 90 g Methanol als Destillat entweichen. Der fertige polyfunktionelle Ester ist eine farblose Flüssigkeit mit einer Hydroxylzahl von 16 mg KOH/g.

Vernetzungskomponente (C4):

Als Vernetzungskomponenten können auch mittel- bis hochreaktive Aminoharze, wie Cymel® 1158 oder Cymel® 1141 der Firma American Cyanamid Comp. eingesetzt werden.

Tabelle 3

| | AB 1 | AB 2 | AB 3 | AB 4 | AB 5 | AB 6 | AB 7 | AB 8 | AB 9 | AB 10 | AB V Vergleich |
|---|---|---|---|---|---|---|---|---|---|---|---|
| (A1) (65 %) | 308 | 77 | --- | --- | --- | --- | 154 | --- | --- | --- | --- |
| (A2) (65 %) | --- | --- | 154 | 462 | --- | --- | --- | --- | --- | --- | 154 |
| (A3) (70 %) | --- | --- | --- | --- | 143 | 214 | --- | --- | --- | --- | --- |
| (A4) (65 %) | --- | --- | --- | --- | --- | --- | --- | 154 | 77 | --- | --- |
| (A5) (70 %) | --- | --- | --- | --- | --- | --- | --- | --- | --- | 214 | --- |
| Methoxypropanol | 444 | --- | 501 | 280 | 515 | --- | 503 | 501 | 532 | 491 | 501 |
| Butoxyethanol | --- | 530 | --- | --- | --- | 489 | --- | --- | --- | --- | --- |
| DAMA | 84 | --- | 80 | 112 | 67 | 107 | 73 | --- | 115 | 98 | 80 |
| BAMA | --- | 180 | --- | --- | --- | --- | --- | 140 | --- | --- | --- |
| HEMA | 159 | 250 | --- | --- | 200 | 235 | --- | --- | 240 | 205 | --- |
| HEA | --- | --- | --- | 168 | --- | --- | 228 | --- | --- | --- | 207 |
| HBA | --- | --- | 154 | --- | --- | --- | --- | 205 | --- | --- | --- |
| TGMA | --- | --- | --- | --- | 70 | --- | --- | --- | --- | --- | --- |
| MMA | 106 | --- | 300 | 130 | 248 | --- | 249 | --- | 260 | 160 | 350 |
| EMA | 306 | 280 | --- | 160 | 100 | 263 | 250 | 295 | --- | 200 | --- |
| BA | --- | --- | 100 | --- | --- | --- | --- | --- | 230 | --- | 263 |
| EHA | 145 | 200 | 266 | 130 | 215 | 185 | 100 | -- | -- | 167 | --- |
| SMA | --- | --- | --- | --- | --- | --- | --- | 180 | 105 | --- | --- |
| ST | --- | 40 | --- | --- | --- | 60 | --- | 80 | --- | --- | --- |
| DCM | 2 | 3 | 2 | --- | 2 | 3 | --- | 2 | 3 | 2 | 2 |
| AIBN | 24 | 32 | 28 | 35 | 34 | 27 | 34 | 30 | 35 | 28 | 29 |

Kennzahlen:

| | AB 1 | AB 2 | AB 3 | AB 4 | AB 5 | AB 6 | AB 7 | AB 8 | AB 9 | AB 10 | AB V |
|---|---|---|---|---|---|---|---|---|---|---|---|
| Aminzahl (mg KOH/g) | 55 | 60 | 41 | 77 | 35 | 55 | 38 | 53 | 46 | 49 | 41 |
| Hydroxylzahl (mg KOH/g) | 119 | 120 | 81 | 145 | 113 | 134 | 136 | 103 | 115 | 100 | 121 |
| Festharzgehalt (%) | 65 | 65 | 65 | 70 | 65 | 65 | 65 | 65 | 65 | 65 | 65 |
| Gehalt an 2-Ethylhexylresten im Acrylatanteil (Gew.-%) | 11,1 | 12,9 | 18,2 | 11,4 | 14,7 | 13,4 | 6,1 | --- | --- | 10,3 | --- |
| Gehalt an Stearylresten im Acrylatanteil (Gew.-%) | --- | --- | --- | --- | --- | --- | --- | 13,5 | 7,9 | --- | --- |

## 2. Beispiele 1-10 und Vergleichsbeispiele VB 1 und VB 2

### 2.1.Herstellung der Bindemittel-Kombinationen

Aus den Bindemittelkomponenten (AB) und (C) wurden durch Mischen der in der Tabelle 4 angegebenen Mengen sowie durch teilweise Neutralisation mit Ameisensäure Bindemittelkombinationen erhalten und auf ihr Aussehen geprüft.

### 2.2.Prüfung der Bindemittel-Kombinationen

Entsprechend den Angaben in Tabelle 4 wurden mit Titandioxid (Rutil) pigmentierte Lacke hergestellt und nach Neutralisation und gegebenenfalls Zugabe eines Katalysators mit Wasser auf den angegebenen Feststoffgehalt verdünnt. Nach einer Homogenisierungszeit von 15 Stunden wurden die Lacke auf mit Zinkphosphat vorbehandeltes Stahlblech in üblicher Weise kathodisch abgeschieden. Die 25 Minuten bei 180°C eingebrannten Lackfilme mit einer Trockenfilmschichtstärke von 22 ± 2 μm wurden in der nachstehend beschriebenen Weise geprüft:

1. UV-Beständigkeit:

1000 Stunden UV-Belastung auf UV CON UC-327-2 UV-Belastungsgerät Firma Atlas Electric Devices Co. Chicago / USA; UV CON (Glanzmessung wie 4.)

2. Waschlaugentest:

Eine 1%ige Lösung eines Haushaltswaschmittels wird auf 76°C erwärmt. Das Prüfblech wird 8 Stunden bei dieser Temperatur in der Lösung belassen. Dann wird die Heizung für weitere 16 Stunden abgeschaltet (= 1 Zyklus). Der Test wird beendet, wenn entweder der Film erweicht ist oder Bläschen auftreten.

3. Salzsprühtest: ASTM-B 117-64, Angabe der Unterwanderung in mm.

4. Glanz: gemessen mit Gonioreflektometer GR-COMP. (Paar, Österreich); Meßwinkel 60°, % vom Standard

Die Prüfungsergebnisse sind in der Tabelle 5 zusammengefaßt.


Tabelle 4

| Bei-spiel | Bindemittelkombination (1) | | (2) | (3) | (4) | (5) |
|---|---|---|---|---|---|---|
| | Komponente (AB), Tle | Komponente (C), Tle | | | | |
| 1 | 70 (AB1) | 30 (C1) | 40 | -- | 50 | 20 |
| 1 a | 70 (AB1)(+) | 30 (C1) | 40 | -- | 50 | 20 |
| 2 | 75 (AB2) | 25 (C1) | 35 | -- | 45 | 18 |
| 3 | 65 (AB3) | 35 (C2) | 45 | 0,8 Sn | 55 | 18 |
| 3a | 65 (AB3)(+) | 35 (C2) | 45 | 0,8 Sn | 55 | 18 |
| 4 | 80 (AB4) | 20 (C3) | 35 | 0,5 Pb | 50 | 18 |
| 4a | 80 (AB4)(+) | 20 (C3) | 35 | 0,5 Pb | 50 | 18 |
| 5 | 70 (AB5) | 30 (C1) | 40 | -- | 40 | 20 |
| 6 | 70 (AB6) | 30 (C1) | 40 | -- | 30 | 22 |
| 7 | 75 (AB7) | 25 (C3) | 30 | 1,0 Sn | 35 | 18 |
| 8 | 70 (AB8) | 30 (C2) | 35 | 1,0 Sn | 50 | 20 |
| 9 | 75 (AB9) | 25 (C3) | 40 | 1,0 Pb | 60 | 18 |
| 10 | 70 (AB10) | 30 (C2) | 35 | 1,0 Sn | 50 | 20 |
| VB 1 | 75 (ABV) | 25 (C1) | 45 | 1,0 Pb | 45 | 18 |
| VB 2 | entspricht dem Beispiel 2 aus der DE-OS 36 28 121 A1 | | | | | |

Bemerkungen zur Tabelle 4:

(1) Die Zahlenangaben beziehen sich auf Teile Festharz. Alle Bindemittelkombinationen gemäß den erfindungs- gemäßen Beispielen waren mittelviskose, klare Harz- lösungen. Dagegen ergaben die Mischungen gemäß den Vergleichsbeispielen (VB 1) und (VB 2) bereits im Ansatz trübe Lösungen.

(2) Menge an Neutralisationsmittel:
Millimol Ameisensäure/100 g Festharz der Komponente (AB)

Bei den mit (+) bezeichneten Komponenten (AB) er- folgte die Zugabe des Neutralisationsmittels be- reits vor der Zugabe der Komponente (C).

(3) Katalysierung der Lacke
Tle Sn (Metall) als Dibutylzinndilaurat
Tle Pb (Metall) als Bleioktoat

(4) Tle $TiO_2$-Pigment

(5) Feststoffgehalt der Lacke in Gew.-% (deionisiertes Wasser als Verdünnungsmittel).

Tabelle 5

| Beispiel | Glanz (ohne Belastung) | UV Beständigkeit | Waschlaugen-test, Zyklen | Salzsprühtest 1000 Stunden mm |
|---|---|---|---|---|
| 1/1a | 65 | 60 | über 25 | 2,5 |
| 2 | 70 | 70 | über 25 | 2 |
| 3/3a | 75 | 70 | 20 | 1 |
| 4/4a | 65 | 55 | über 25 | 1 |
| 5 | 70 | 70 | über 25 | 1,5 |
| 6 | 65 | 60 | über 25 | 3 |
| 7 | 70 | 65 | über 25 | 2 |
| 8 | 75 | 75 | 22 | 2 |
| 9 | 80 | 75 | über 25 | 3 |
| 10 | 65 | 60 | 23 | 2,5 |
| VB1 | 40 | 30 | 14 | 5,5 |
| VB2 +) | 58 | 35 | 12 | 6 |

+) Beispiel 2 aus DE-OS 36 28 121 A1

Alle eingebrannten Filme sind gilbungsfrei

**Patentansprüche**

**Patentansprüche für folgende Vertragsstaaten : BE, CH, DE, FR, GB, IT, LI, NL, SE**

1. Verfahren zur Herstellung von wasserverdünnbaren, kathodisch abscheidbaren Lackbindemittel-Kombinationen auf der Basis von Epoxidharzamin-Addukten, Acrylatcopolymerisaten und Vernetzungskompo-

11

nenten, dadurch gekennzeichnet, daß man in

(A) 3 bis 30 Gew.-%, vorzugsweise 5 bis 20 Gew.-%, bezogen auf Feststoff, eines basischen epoxidgruppenfreien Addukts aus Epoxidharzen, die gegebenenfalls teilweise defunktionalisiert sind, und Aminoverbindungen, welches eine Aminzahl von 50 bis 170 mg KOH/g, vorzugsweise von 90 bis 130 mg KOH/g, aufweist und welches als 10 bis 40 Gew.-%ige Lösung in einem reaktionsinerten, wassertoleranten Lösungsmittel vorliegt,

(B) 70 bis 97 Gew.-%, vorzugsweise 80 bis 95 Gew.-%, eines Monomerengemisches, welches

(Ba) 7 bis 20 Gew.-% sekundäre oder tertiäre Aminogruppen aufweisende Ester der (Meth)-acrylsäure,

(Bb) 15 bis 30 Gew.-% Monoester der (Meth)acrylsäure mit Diolen, die Alkylenreste mit 2 bis 6 C-Atomen und/oder Oxyalkylenreste mit 4 bis 12 C-Atomen aufweisen,

(Bc) 50 bis 78 Gew.-% von (Meth)acrylsäurealkylester, deren Alkylreste 1 bis 18 C-Atome aufweisen, und

(Bd) bis zu 10 Gew.-% aromatische Vinylmonomere, vorzugsweise Styrol,

enthält,

in bekannter Weise radikalisch polymerisiert und 60 bis 80 Gew.-%, bezogen auf Feststoff, dieser Lösung der Komponente (AB), gegebenenfalls nach Verminderung des Lösemittelanteils und/oder teilweiser Protonisierung der Aminogruppen mit Säuren, vorzugsweise mit Ameisen-, Essig- oder Milchsäure, mit

(C) 20 bis 40 Gew.-%, bezogen auf Feststoff, einer Vernetzungskomponente mischt und anschließend die so erhaltene Lackbindemittel-Kombination mit deionisertem Wasser auf einen für die weitere Verarbeitung geeigneten Feststoffgehalt verdünnt,

mit den Maßgaben, daß die Komponenten (A) und (B) jeweils mindestens 5 Gew.-%, vorzugsweise 10 bis 20 Gew.-%, an identischen aliphatischen Resten mit 7 bis 18 C-Atomen enthalten, daß die Komponente (AB) eine Aminzahl von 30 bis 90 mg KOH/g, vorzugsweise von 40 bis 70 mg KOH/g, und eine Hydroxylzahl von 80 bis 150 mg KOH/g aufweist, und daß die Summen der Prozentzahlen der Komponenten (A) und (B), (Ba) bis (Bd) bzw. (AB) und (C) jeweils 100 ergeben.

2.  Verfahren gemäß Anspruch 1, dadurch gekennzeichnet, daß man als Komponente (A) Epoxidharzamin-Addukte einsetzt, die mit Alkylaminen, deren Alkylreste 7 bis 18 C-Atomen aufweisen und/oder mit Alkylglycidylethern und/oder Alkylglycidylestern, deren Alkylreste 7 bis 18 C-Atome aufweisen, modifiziert wurden.

3.  Verfahren gemäß Anspruch 1, dadurch gekennzeichnet, daß man als Komponente (Ba) N-Monoalkyl- und/oder N-Dialkyl-aminoalkyl(meth)acrylate und/oder die entsprechenden N-Alkanolverbindungen einsetzt.

4.  Wasserverdünnbare, kathodisch abscheidbare Lackbindemittel-Kombinationen auf der Basis von Epoxidharzamin-Addukten, Acrylatcopolymerisaten und Vernetzungskomponenten, hergestellt gemäß den Ansprüchen 1 bis 3.

5.  Verwendung der gemäß den Ansprüchen 1 bis 3 hergestellten Lackbindemittel-Kombinationen zur Formulierung von wasserverdünnbaren, kathodisch abscheidbaren Grundierungen und Einschichtlakken.

**Patentansprüche für folgenden Vertragsstaat : ES**

1.  Verfahren zur Herstellung von wasserverdünnbaren, kathodisch abscheidbaren Lackbindemittel-Kombinationen auf der Basis von Epoxidharzamin-Addukten, Acrylatcopolymerisaten und Vernetzungskomponenten, dadurch gekennzeichnet, daß man in

(A) 3 bis 30 Gew.-%, vorzugsweise 5 bis 20 Gew.-%, bezogen auf Feststoff, eines basischen epoxidgruppenfreien Addukts aus Epoxidharzen, die gegebenenfalls teilweise defunktionalisiert sind, und Aminoverbindungen, welches eine Aminzahl von 50 bis 170 mg KOH/g, vorzugsweise von 90 bis 130 mg KOH/g, aufweist und welches als 10 bis 40 Gew.-%ige Lösung in einem reaktionsinerten, wassertoleranten Lösungsmittel vorliegt,

(B) 70 bis 97 Gew.-%, vorzugsweise 80 bis 95 Gew.-%, eines Monomerengemisches, welches

(Ba) 7 bis 20 Gew.-% sekundäre oder tertiäre Aminogruppen aufweisende Ester der (Meth)-acrylsäure,

(Bb) 15 bis 30 Gew.-% Monoester der (Meth)acrylsäure mit Diolen, die Alkylenreste mit 2 bis 6 C-Atomen und/oder Oxyalkylenreste mit 4 bis 12 C-Atomen aufweisen,

(Bc) 50 bis 78 Gew.-% von (Meth)acrylsäurealkylester, deren Alkylreste 1 bis 18 C-Atome aufweisen, und

(Bd) bis zu 10 Gew.-% aromatische Vinylmonomere, vorzugsweise Styrol,

enthält,

in bekannter Weise radikalisch polymerisiert und 60 bis 80 Gew.-%, bezogen auf Feststoff, dieser Lösung der Komponente (AB), gegebenenfalls nach Verminderung des Lösemittelanteils und/oder teilweiser Protonisierung der Aminogruppen mit Säuren, vorzugsweise mit Ameisen-, Essig- oder Milchsäure, mit

(C) 20 bis 40 Gew.-%, bezogen auf Feststoff, einer Vernetzungskomponente mischt und anschließend die so erhaltene Lackbindemittel-Kombination mit deionisertem Wasser auf einen für die weitere Verarbeitung geeigneten Feststoffgehalt verdünnt,

mit den Maßgaben, daß die Komponenten (A) und (B) jeweils mindestens 5 Gew.-%, vorzugsweise 10 bis 20 Gew.-%, an identischen aliphatischen Resten mit 7 bis 18 C-Atomen enthalten, daß die Komponente (AB) eine Aminzahl von 30 bis 90 mg KOH/g, vorzugsweise von 40 bis 70 mg KOH/g, und eine Hydroxylzahl von 80 bis 150 mg KOH/g aufweist, und daß die Summen der Prozentzahlen der Komponenten (A) und (B), (Ba) bis (Bd) bzw. (AB) und (C) jeweils 100 ergeben.

2. Verfahren gemäß Anspruch 1, dadurch gekennzeichnet, daß man als Komponente (A) Epoxidharzamin-Addukte einsetzt, die mit Alkylaminen, deren Alkylreste 7 bis 18 C-Atomen aufweisen und/oder mit Alkylglycidylethern und/oder Alkylglycidylestern, deren Alkylreste 7 bis 18 C-Atome aufweisen, modifiziert wurden.

3. Verfahren gemäß Anspruch 1, dadurch gekennzeichnet, daß man als Komponente (Ba) N-Monoalkyl- und/oder N-Dialkyl-aminoalkyl(meth)acrylate und/oder die entsprechenden N-Alkanolverbindungen einsetzt.

4. Verwendung der gemäß den Ansprüchen 1 bis 3 hergestellten Lackbindemittel-Kombinationen zur Formulierung von wasserverdünnbaren, kathodisch abscheidbaren Grundierungen und Einschichtlakken.

**Claims**

**Claims for the following Contracting States : BE, CH, DE, FR, GB, IT, LI, NL, SE**

1. Process for the preparation of water-dilutable coating binder combinations which can be deposited cathodically and are based on epoxy resin-amine adducts, acrylate copolymers and crosslinking components, characterised in that in

(A) 3 to 30% by weight, preferably 5 to 20% by weight, based on the solids, of a basic adduct of epoxy resins, which are optionally partly defunctionalised, and amino compounds which is free from epoxide groups, has an amine number of 50 to 170 mg of KOH/g, preferably 90 to 130 mg of KOH/g, and is present as a 10 to 40% strength by weight solution in a water-tolerant solvent which is inert to the reaction,

(B) 70 to 97% by weight, preferably 80 to 95% by weight, of a monomer mixture which comprises

(Ba) 7 to 20% by weight of esters of (meth)acrylic acid which contain secondary or tertiary amino groups,

(Bb) 15 to 30% by weight of monoesters of (meth)acrylic acid with diols, which contain alkylene radicals having 2 to 6 C atoms and/or oxyalkylene radicals having 4 to 12 C atoms,

(Bc) 50 to 78% by weight of (meth)acrylic acid alkyl esters, the alkyl radicals of which contain 1 to 18 C atoms, and

(Bd) up to 10% by weight of aromatic vinyl monomers, preferably styrene,

is subjected to free radical polymerisation in a known manner, and 60 to 80% by weight, based on the solids, of this solution of component (AB) is mixed, if appropriate after reduction of the solvent content and/or partial protonation of the amino groups with acids, preferably with formic, acetic or lactic acid, with

C) 20 to 40% by weight, based on the solids, of a crosslinking component, and the coating binder combination thus obtained is diluted with deionised water to a solids content suitable for further processing,

with the provisos that components (A) and (B) in each case comprise at least 5% by weight, preferably 10 to 20% by weight, of identical aliphatic radicals having 7 to 18 C atoms, that component (AB) has an amine number of 30 to 90 mg of KOH/g, preferably 40 to 70 mg of KOH/g, and a hydroxyl number of 80 to 150 mg of KOH/g, and that the sums of the percentage figures of components (A) and (B), (Ba) to (Bd), and (AB) and (C) are in each case 100.

2. Process according to Claim 1, characterised in that epoxy resin-amino adducts which have been modified with alkylamines, the alkyl radicals of which contain 7 to 18 C atoms, and/or with alkyl glycidyl ethers and/or alkyl glycidyl esters, the alkyl radicals of which contain 7 to 18 C atoms, are employed as component (A).

3. Process according to Claim 1, characterised in that N-monoalkyl- and/or N-dialkyl-aminoalkyl (meth)-acrylates and/or the corresponding N-alkanol compounds are employed as component (Ba).

4. Water-dilutable coating binder combinations which can be deposited cathodically and are based on epoxy resin-amino adducts, acrylate copolymers and crosslinking components, prepared according to Claims 1 to 3.

5. Use of the coating binder combinations prepared according to Claims 1 to 3 for formulation of water-dilutable primers and one-coat paints which can be deposited cathodically.

**Claims for the following Contracting State : ES**

1. Process for the preparation of water-dilutable coating binder combinations which can be deposited cathodically and are based on epoxy resin-amine adducts, acrylate copolymers and crosslinking components, characterised in that in

   (A) 3 to 30% by weight, preferably 5 to 20% by weight, based on the solids, of a basic adduct of epoxy resins, which are optionally partly defunctionalised, and amino compounds which is free from epoxide groups, has an amine number of 50 to 170 mg of KOH/g, preferably 90 to 130 mg of KOH/g, and is present as a 10 to 40% strength by weight solution in a water-tolerant solvent which is inert to the reaction,

   (B) 70 to 97% by weight, preferably 80 to 95% by weight, of a monomer mixture which comprises
   (Ba) 7 to 20% by weight of esters of (meth)acrylic acid which contain secondary or tertiary amino groups,
   (Bb) 15 to 30% by weight of monoesters of (meth)acrylic acid with diols, which contain alkylene radicals having 2 to 6 C atoms and/or oxyalkylene radicals having 4 to 12 C atoms,
   (Bc) 50 to 78% by weight of (meth)acrylic acid alkyl esters, the alkyl radicals of which contain 1 to 18 C atoms, and
   (Bd) up to 10% by weight of aromatic vinyl monomers, preferably styrene,

   is subjected to free radical polymerisation in a known manner, and 60 to 80% by weight, based on the solids, of this solution of component (AB) is mixed, if appropriate after reduction of the solvent content and/or partial protonation of the amino groups with acids, preferably with formic, acetic or lactic acid, with

   C) 20 to 40% by weight, based on the solids, of a crosslinking component, and the coating binder combination thus obtained is diluted with deionised water to a solids content suitable for further processing,

   with the provisos that components (A) and (B) in each case comprise at least 5% by weight, preferably 10 to 20% by weight, of identical aliphatic radicals having 7 to 18 C atoms, that component (AB) has an amine number of 30 to 90 mg of KOH/g, preferably 40 to 70 mg of KOH/g, and a hydroxyl number of 80 to 150 mg of KOH/g, and that the sums of the percentage figures of components (A) and (B), (Ba) to (Bd), and (AB) and (C) are in each case 100.

2. Process according to Claim 1, characterised in that epoxy resin-amine adducts which have been modified with alkylamines, the alkyl radicals of which contain 7 to 18 C atoms, and/or with alkyl glycidyl ethers and/or alkyl glycidyl esters, the alkyl radicals of which contain 7 to 18 C atoms, are employed as component (A).

3. Process according to Claim 1, characterised in that N-monoalkyl- and/or N-dialkyl-aminoalkyl (meth)-acrylates and/or the corresponding N-alkanol compounds are employed as component (Ba).

4. Use of the coating binder combinations prepared according to Claims 1 to 3 for formulation of water-dilutable primers and one-coat paints which can be deposited cathodically.

**Revendications**
**Revendications pour les Etats contractants suivants : BE, CH, DE, FR, GB, IT, LI, NL, SE**

1. Procédé de préparation de combinaisons de liants pour peintures diluables à l'eau, déposables à la cathode à base de produits d'addition de résine époxyde-amine, de copolymères acryliques et de composants de réticulation, caractérisé en ce qu'on polymérise de façon connue par voie radicalaire dans

    (A) 3 à 30% en poids, de préférence 5 à 20% en poids, par rapport à la matière solide, d'un produit d'addition basique exempt de groupes époxy obtenu à partir de résines époxydiques qui sont éventuellement partiellement défonctionnalisées et de composés amino, lequel possède un indice d'amine de 50 à 110 mg de KOH/g, de préférence de 90 à 130 mg de KOH/g et se présente sous la forme d'une solution de 10 à 40% en poids dans un solvant inerte tolérant de l'eau,

    (B) 70 à 97% en poids, de préférence 80 à 95% en poids d'un mélange de monomères contenant

        (Ba) 7 à 20% en poids d'esters d'acide (méth)acrylique comportant des groupes amino secondaires ou tertiaires,

        (Bb) 15 à 30% en poids de monoesters de l'acide (méth)acrylique avec des diols comportant des restes alkylènes avec 2 à 6 atomes de C et/ou des restes oxyalkylènes avec 4 à 12 atomes de C,

        (Bc) 50 à 78% en poids de (méth)acrylates d'alkyle dont les restes alkyles comportent 1 à 18 atomes de C et

        (Bd) jusqu'à 10% en poids de monomères vinyliques aromatiques, de préférence le styrène et qu'on mélange 60 à 80% en poids, par rapport à la matière solide, de cette solution des composants (AB), éventuellement après réduction de la fraction de solvant et/ou protonation partielle des groupes amino avec des acides, de préférence avec de l'acide formique, acétique ou lactique, avec

    (C) 20 à 40% en poids, par rapport à la matière solide, d'un composant de réticulation et dilue ensuite la combinaison de liants pour peintures ainsi obtenue avec de l'eau déionisée jusu'à un taux de solides convenant à la transformation ultérieure, sous réserve que les composants (A) et (B) contiennent chacun au moins 5% en poids, de préférence 10 à 20% en poids de restes aliphatiques identiques avec 7 à 18 atomes de C, que le composant (AB) présente un indice d'amine de 30 à 90 mg de KOH/g, de préférence de 40 à 70 mg de KOH/g et un indice d'hydroxyle de 80 à 150 mg de KOH/g et que les sommes des pourcentages des composants (A) et (B), (Ba) à (Bd), respectivement (AB) et (C) s'établissent à 100.

2. Procédé selon la revendication 1, caractérisé en ce qu'on met en oeuvre en tant que composant (A) des produits d'addition de résine époxyde-amine qui ont été modifiés à l'aide d'alkylamines dont les restes alkyles comportent 7 à 18 atomes de C et/ou d'éthers alkyl glycidiques et/ou d'esters alkyl glycidiques dont les restes alkyles comportent 7 à 18 atomes de C.

3. Procédé selon la revendication 1, caractérisé en ce qu'on met en oeuvre en tant que composant (Ba) des aminoalkyl(méth)acrylates de N-monoalkyle et/ou de N-dialkyle et/ou les composés N-alcanols correspondants.

4. Combinaisons de liants pour peintures diluables à l'eau, déposables à la cathode à base des produits d'addition de résine époxyde-amine, de copolymères acryliques et de composants de réticulation, préparées selon les revendications 1 à 3.

5. Utilisation des combinaisons de liants pour peintures préparées selon les revendications 1 à 3 pour la formulation d'apprêts et de peintures monocouches diluables à l'eau, déposables à la cathode.

**Revendications pour l'Etat contractant suivant : ES**

1. Procédé de préparation de combinaisons de liants pour peintures diluables à l'eau, déposables à la cathode à base de produits d'addition de résine époxyde-amine, de copolymères acryliques et de composants de réticulation, caractérisé en ce qu'on polymérise de façon connue par voie radicalaire dans

   (A) 3 à 30% en poids, de préférence 5 à 20% en poids, par rapport à la matière solide, d'un produit d'addition basique exempt de groupes époxy obtenu à partir de résines époxydiques qui sont éventuellement partiellement défonctionnalisées et de composés amino, lequel possède un indice d'amine de 50 à 110 mg de KOH/g, de préférence de 90 à 130 mg de KOH/g et se présente sous la forme d'une solution de 10 à 40% en poids dans un solvant inerte tolérant de l'eau,

   (B) 70 à 97% en poids, de préférence 80 à 95% en poid s d'un mélange de monomères contenant

   (Ba) 7 à 20% en poids d'esters d'acide (méth)acrylique comportant des groupes amino secondaires ou tertiaires,

   (Bb) 15 à 30% en poids de monoesters de l'acide (méth)acrylique avec des diols comportant des restes alkylènes avec 2 à 6 atomes de C et/ou des restes oxalkylènes avec 4 à 12 atomes de C,

   (Bc) 50 à 78% en poids de (méth)acrylates d'alkyle dont les restes alkyles comportent 1 à 18 atomes de C et

   (Bd) jusqu'à 10% en poids de monomères vinyliques aromatiques, de préférence le styrène et qu'on mélange 60 à 80% en poids, par rapport à la matière solide, de cette solution des composants (AB), éventuellement après réduction de la fraction de solvant et/ou protonation partielle des groupes amino avec des acides, de préférence avec de l'acide formique, acétique ou lactique, avec

   (C) 20 à 40% en poids, par rapport à la matière solide, d'un composant de réticulation et dilue ensuite la combinaison de liants pour peintures ainsi obtenue avec de l'eau déionisée jusqu'à un taux de solides convenant à la transfrmation ultérieure, sous réserve que les composants (A) et (B) contiennent chacun au moins 5% en poids, de préférence 10 à 20% en poids de restes aliphatiques identiques avec 7 à 18 atomes de C, que le composant AB) présente un indice d'amine de 30 à 90 mg de KOH/g, de préférence de 40 à 70 mg de KOH/g et un indice d'hydroxyle de 80 à 150 mg de KOH/g et que les sommes des pourcentages des composants (A) et (B), (Ba) à (Bd), respectivt. (AB) et (C) s'établissent à 100.

2. Procédé selon la revendication 1, caractérisé en ce qu'on met en oeuvre en tant que composant (A) des produits d'addition de résine époxyde-amine qui ont été modifiés à l'aide d'alkylamines dont les restes alkyles comportent 7 à 18 atomes de C et/ou d'éthers alkyl glycidiques et/ou d'esters alkyl glycidiques dont les restes alkyles comportent 7 à 18 atomes de C.

3. Procédé selon la revendication 1, caractérisé en ce qu'on met en oeuvre en tant que composant (Ba) des aminoalkyl(méth)acrylates de N-monoalkyle et/ou de N-dialkyle et/ou les composés N-alcanols correspondants.

4. Utilisation des combinaisons de liants pour peintures préparées selon les revendications 1 à 3 pour la formulation d'apprêts et de peintures monocouches diluables à l'eau, déposables à la cathode.